Europäisches Patentamt

(19) European Patent Office

Office européen des brevets

(11) Numéro de publication: **0 213 045**

**B1**

(12) **FASCICULE DE BREVET EUROPEEN**

(45) Date de publication du fascicule du brevet: **23.01.91**

(51) Int. Cl.⁵: **C 03 C 17/245, H 01 L 31/02**

(21) Numéro de dépôt: **86401846.0**

(22) Date de dépôt: **20.08.86**

(54) **Procédé pour le dépôt d'une couche de silice à surface irrégulière sur un substrat en verre.**

(30) Priorité: **20.08.85 JP 182779/85**

(43) Date de publication de la demande:
**04.03.87 Bulletin 87/10**

(45) Mention de la délivrance du brevet:
**23.01.91 Bulletin 91/04**

(84) Etats contractants désignés:
**AT BE CH DE FR GB IT LI LU NL SE**

(56) Documents cités:
EP-A-0 137 291
DE-A-1 301 188

JOURNAL OF NON-CRYSTALLINE SOLIDS, vol. 82, no. 1/3, juin 1986, pages 411-416, Elsevier Science Publishers B.V., Amsterdam, NL; P. HINZ et al.: "Anti-reflecting light-scattering coatings via the sol-gel-procedure" VIDE, vol. 40, no. 227, mai-juin 1985, pages 353-357, Paris, FR; S. AUDISIO et al.: "Couches de dioxyde de Si obtenues par dépôt chimique a partir d'une phase gazeuse (C.V.D.) : élaboration et caractérisation

(73) Titulaire: **SAINT-GOBAIN VITRAGE INTERNATIONAL**
**18, avenue d'Alsace**
**F-92400 Courbevoie (FR)**

(72) Inventeur: **Hirata, Masahiro**
**21-1-320, Ohata-Cho**
**Takatsuki-Shi Osaka (JP)**
Inventeur: **Misonou, Masao**
**6-1-104, Damjo-Cho 6-Chome**
**Nishinomiya-Shi Hyog (JP)**
Inventeur: **Hyodoh, Masato**
**21, Nakano-Higashi 3-Chome**
**Itami-Shi Hyogo (JP)**
Inventeur: **Kawahara, Hideo**
**8-3-205, Ninami Sakurazuka**
**2-Chome Toyonaka-Shi Osaka (JP)**

(74) Mandataire: **Leconte, Jean-Gérard et al**
**Saint-Gobain Recherche 39, Quai Lucien Lefranc**
**F-93304 Aubervilliers Cedex (FR)**

# EP 0 213 045 B1

(56) Documents cités:

**CHEMICAL ABSTRACTS, vol. 103, no. 12, 23 septembre 1985, page 158, résumé no. 90447y, Columbus, Ohio, US; S.P. CHOW et al.: "Effect of antireflection coatings on the transmittance of glass tubular and plane double glazed covers for flat plate solar collectors"**

## Description

La présente invention concerne un procédé pour former une couche de silice à surface irrégulière sur un substrat du type plaque de verre et le substrat ainsi revêtu, utile notamment dans des piles solaires.

Une telle couche à surface irregulière peut servir à former une surface mate, une surface anti-reflet, une surface traitée pour pile solaire, etc.

Il est connu de fabriquer à prix réduit des piles solaires utilisant le silicium amorphe Si-a déposé par des techniques sous vide à partir de silane. Une telle pile solaire au silicium amorphe a un taux de conversion photoélectrique faible en comparaison des autres piles fabriquées à partir d'autres semi-conducteurs (Si, GaAs, etc.).

Pour améliorer ce rendement des piles, différentes mesures tenant au procédé de fabrication et à la structure desdites piles ont été prises et restent à prendre.

Parmi ces mesures possibles, une est très importante et consiste à réduire la perte de rendement due à la réflexion de la lumière sur la surface, et à augmenter le courant de court-circuit.

Pour cela, il a été proposé de créer une structure d'inégalité dans une pile solaire, de faire une multi-réflexion-réfraction de la lumière incidente dans la pile et, ainsi d'améliorer le rendement de collection de la lumière.

Ainsi, Chemical Abstracts Vol 103 n° 12, 23-09-85, résumé n° 90447 g indique qu'une couche de silice antireflexion particulaire est obtenue sur un support de verre en plongeant le substrat dans une solution alcaline diluée de $SiO_2$ colloïdale.

Le brevet EP—A—0 137 291 décrit une couche électroconductrice déposée sur un substrat de verre pour former une électrode transparente utile dans des piles solaires. Cette couche électroconductrice (par exemple oxyde d'indium et/ou oxyde d'étain) présente une surface irrégulière au contact de la couche de silicium amorphe, cette surface irrégulière étant due à des particules d'oxyde d'induim et/ou d'oxyde d'étain. Lorsque la couche de silicium amorphe est formée sur cette couche conductrice à surface irrégulière, les interstices entre les particules sont remplis de silicium, constituant ainsi une couche intermédiaire servant à la réflexion de la lumière.

Le document "VIDE" -vol 40 n° 227—Mai Juin 1985—pages 353—357 décrit un substrat de silicium monocristallin recouvert d'une couche de silice. Cette couche est obtenue en projetant, à température ambiante, du gaz $SiCl_4$ et de la vapeur d'eau pour obtenir l'hydrolyse du $SiCl_4$.

DE—A—1 301 188 décrit la formation d'une couche de silice sur un substrat, tel que du quartz, par décomposition de gaz tel que $SiCl_4$ et de vapeur d'eau pour obtenir l'hydrolyse de $SiCl_4$ et la formation d'une couche de $SiO_2$ sur la surface du substrat. Les conditions sont telles que la vapeur d'eau est adsorbée sur le substrat pour obtenir la formation de la couche de silice sur le substrat et non la formation de poudre par réaction de gaz avant d'atteindre le substrat.

Ces procédés peuvent présenter des inconvénients dus, notamment, à l'utilisation de gaz de $SiCl_4$ avec des substrats en verre.

En outre, lorsque l'inégalité est trop importante, l'épaisseur de la couche n'est plus régulière, des trous d'épingles à l'origine de courts-circuits se créent, si bien que les performances au lieu d'être améliorées, chutent, que la tension de court-circuit est abaissée, que le pourcentage de produits fabriqués acceptables est diminué.

La présente invention vise à porter remède à ce problème en contrôlant de façon très précise cette création d'inégalités qui rendent la surface anti-reflet.

Le procédé, selon l'invention, pour former une couche de silice à surface irrégulière sur un substrat de verre, comprenant des grains de silice incrustés dans la couche, se caractérisé en ce qu'on souffle sur le substrat chauffé, à partir d'une buse ayant une pluralité de sorties séparées, des molécules gazeuses contenant des atomes de silicium et un gaz oxydant, dilués dans des gaz inertes et en outre un gaz inerte de séparation et en ce qu'on contrôle la concentration X en molécules gazeuses comprenant des atomes de silicium dans le gaz inerte et la concentration Y du gaz oxydant dans le gaz inerte et, en outre, le débit de chaque gaz de façon que le rapport B/A soit comprise entre 0,5 et 2 et le rapport C/A+B soit compris entre 0,1 et 1,5, "A" représentant le débit du mélange gaz au silicium+gaz inerte, "B" représentant le débit du mélange gaz oxydant+gaz inerte et "C" représentant le débit de gaz inerte de séparation, de façon à obtenir la foramtion de grains de silice par réaction entre des molécules gazeuses contenant le silicium et le gaz oxydant dans l'espace situé entre les sorties de la buse et le substrat et simultanément, le dépôt d'une couche de silice sur le substrat à partir des composants n'ayant pas encore réagi, les grains de silice s'incrustant dans ladite couche de façon à former une couche de silice à surface irrégulière.

On contrôle la concentration, les proportions, les débits des matières premières de façon à ce que le dépôt de la couche sur la surface du substrat et la formation des grains de silice dans l'espace entre la buse et le substrat soient simultanés, ce qui facilite l'entrée de ces grains dans la couche déposée.

Les techniques de dépôt de silice consistant à envoyer sur un substrat chauffé un gaz comportant du silicium et un gaz oxydant (méthode C.V.D. par exemple décrite dans "Solid State Technology, oct. 1981) ont pour résultat une couche lisse et même aussi lisse et régulière que possible.

Selon la méthode C.V.D. classique précitée, il est normal d'utiliser des sorties de buse séparées pour amener séparément les différentes matières et un gaz inerte les séparant et pour les souffler séparément à partir des sorties séparées de façon que la réaction entre la molécule gazeuse comprenant l'atome de silicium et le gaz oxydant puisse se produire principalement sur la surface du substrat et que la buse ne soit pas colmatée par une réaction de la molécule gazeuse avec le gaz oxydant à la proximité des sorties de cette buse. Selon cette invention, ont utilise la même buse à sorties séparées et également un gaz inerte de séparation.

En outre, selon l'invention on contrôle le rapport Y/X des matières premières, à savoir le rapport de la concentration "Y" en gaz oxydant dans le mélange de gaz oxydant et de gaz inerte, à la concentration "X" en gaz contenant du silicium dans le mélange de gaz au silicium et de gaz inerte, on contrôle le débit de chaque gaz de matière première, y compris le débit de gaz inerte, de façon que le rapport B/A du débit B de gaz oxydant dilué dans le gaz inerte au débit A de gaz au silicium dilué dans le gaz inerte soit de 0,5 à 2 et également que le rapport C/(A+B) soit compris entre 0,1 et 1,5 C étant le débit de gaz inerte de séparation.

Comme gaz utilisables on peut citer:
. $N_2$ pour le gaz inerte,
. $SiH_4$ pour le gaz contenant le silicium,
. $O_2$ pour l'oxygène.

Avec ces gaz précités le rapport y:x est avantageusement compris entre 10 et 40.
. "X" représentant la proportion en volume de $SiH_4$ dans le mélange $SiH_4+N_2$ est de l'ordre de 2,5 à 4%,
. "Y" représentant la proportion en volume de $O_2$ dans le mélange $O_2+N_2$ est de l'ordre de 20 à 40%,
. "A" représentant le débit de $SiH_4+N_2$ est de l'ordre de 1,8 à 2,5 l/min à température ambiante,
. "B" représentant le débit de $O_2+N_2$ est de l'ordre de 2 à 2,5 l/min à température ambiante,
. "C" représentant le débit de $N_2$ est de l'ordre de 0,5 à 5 l/min à température ambiante.

Le débit "C" de gaz inerte de séparation est très important. Quand le débit de gaz inerte de séparation est faible, on ne peut pas obtenir un dépôt stable en continu de la couche car le colmatage des sorties de buse est fréquent. Par contre, quand le débit de gaz inerte de séparation est très important, on ne peut pas obtenir non plus une couche ayant une surface inégale car les grains de silice produits entre la buse et le substrat n'entrent pas dans la couche.

Comme molécule gazeuse comprenant l'atome de silicium, on utilise le gaz de silane ($SiH_4$) et le gaz de disilane ($SiH_2H_6$) préférentiellement. Mais il est possible d'utiliser d'autres produits. Egalement, si le gaz de silane est mélangé avec $PH_3$ ou $Ti(OC_2H_5)_4$, on peut déposer des couches mixtes de $SiO_2$ et $P_2O_5$ ou de $SiO_2$ et $TiO_2$.

Il est par ailleurs possible de déposer une autre couche selon la même ou une autre méthode de dépôt sur la couche ainsi déposée selon la méthode précitée.

La présente méthode est très utile pour contrôler minutieusement la forme de la surface d'une couche au moment de son dépôt lorsqu'une très haute précision de forme est nécessaire comme c'est le cas pour un substrat pour pile solaire.

Il est préférable que le diamètre des grains de silice produits entre la buse et la surface du substrat soit de 20 à 500 nm. Les grains au-dessus de 500 nm de diamètre et en dessous de 20 nm de diamètre sont difficilement incorporés dans la couche, ce qui fait qu'il est difficile d'obtenir une couche ayant une surface inégale.

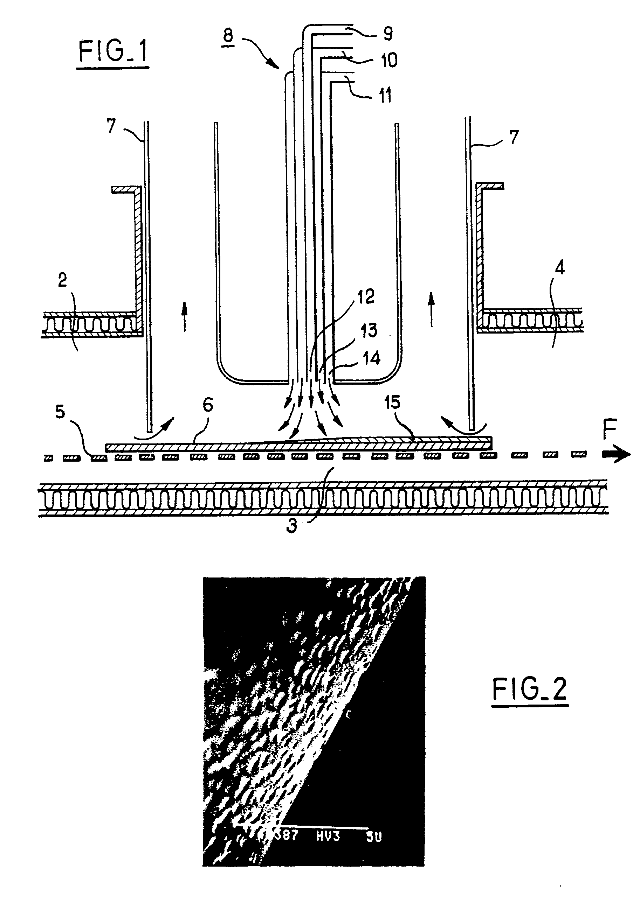

L'invention sera maintenant décrite plus en détail à l'aide d'exemples, en se référant aux figures jointes qui représentant:
. figure 1: une vue d'ensemble d'un équipement pour déposer la couche selon l'invention,
. figure 2: une copie de photo d'une vue au microscope électronique montrant une partie de surface de couche dans laquelle des grains de silice sont incrustés.

Le dispositif montré sur la figure 1 en coupe, est principalement constitué d'un four de chauffage 2 d'un substrat 6 tel une plaque de verre à base de soude et de chaux, d'une zone de revêtement 3, d'un four de recuisson 4 et d'un convoyeur 5 tel que le substrat 6 posé sur le tapis de convoyeur 5 puisse être entraîné dans le sens de la flèche F successivement dans le four de chauffage, dans la zone de revêtement et dans le four de recuisson.

La zone de revêtement 3 est équipée d'une chambre 7 d'extraction et d'évacuation des gaz. Une buse 8 associant une pluralité de sorties est montée dans cette zone de revêtement 3. Cette buse 8 comporte une voie 9 pour l'amenée du gaz contenant l'atome Si, par exemple $SiH_4$, une voie 10 pour le gaz de séparation, une voie 11 pour le gaz oxydant tel $O_2$. Ces différentes voies 9, 10, 11 ainsi séparées permettent de souffler séparément les gaz de matières premières, y compris le gaz de séparation, sous la forme de jets à partir des sorties par exemple en forme de fente 12, 13 et 14 aux extrémités respectives des voies 9, 10, 11.

Cet équipement de dépôt a été utilisé de la façon suivante pour former sur un substrat en verre une couche de silice.

Comme échantillons de verre 6, on a utilisé un carré de verre à base de soude et de chaux de 100 mm de côté et de 1 mm d'épaisseur. Cet écahntillon est lavé et séché.

On pose ce substrat de verre 6 sur le convoyeur 5 qui se déplace à une vitesse de 30 cm/min, on le chauffe à 520°C dans le four de chauffage 2. Avant de faire entrer ce substrat de verre 6 dans la zone de revêtement 3, on met en marche le soufflage de gaz $SiH_4$ dilué dans $N_2$, à 4.0% en volume de $SiH_4$, de gaz de séparation et de gaz $O_2$ dilué dans $N_2$ à 43% en volume d'$O_2$, avec des débits respectifs de 2.3 l/min, 1.0 l/min et 2.4 l/min (débits mesurés à température ambiante). Ces gaz sont éjectés par les sorties en fente 12, 13 et 14 après avoir été acheminés par la voie 9 pour le gaz $SiH_4$, la voie 10 pour le gaz de séparation et la voie 11 pour le gaz $O_2$. En même temps qu'on a commencé à souffler ces gaz, on met en marche l'extraction des gaz en excès et des gaz déchets de la chambre 7 d'évacuation des gaz, avec un débit de 22 l/min.

Ainsi une couche de silice 15 est déposée sur le substrat de verre 6 entraîné dans la zone de revêtement 3.

Dans le cas de cet exemple, la distance entre l'extrémité de la buse 8 et le substrat de verre 6 est d'environ 2 cm. La réaction du gaz $SiH_4$ avec le gaz $O_2$ se produit entre la buse 8 et le substrat de verre et des grains de silice d'un diamètre d'environ de 100 à 400 nm sont formés.

Le substrat 6 est refroidi jusqu'à la température ambiante dans le four de recuisson 4 après son passage dans la zone de revêtement 3. L'épaisseur de cette couche de silice ainsi déposée sur le substrat est d'environ 200 nm et on observe à l'aide d'un microscope électronique, des demisphères convexes formées sur cette couche correspondant aux grains de silice incrustés.

la figure 2 montre une photo, prise sur le microscope électronique. Cette photo montre la forme des grains formés sur la couche de silice.

La forme et le nombre de ces parties convexes formées par les grains sur la couche pour une surface unitaire peuvent s'exprimer en degré de perturbation ou le taux de brouillage d'une lumière incidente arrivant perpendiculairement au substrat. Ce taux de brouillage de l'échantillon obtenu a été mesuré et évalué à environ 5% (méthode de mesure de brouillage de la plaque de méthacrylate utilisée dans l'aéronautique-document japonais JIS, K-6714-1977). Un taux de brouillage de 0.2% est obtenu sur un échantillon revêtu d'une couche de $SiO_2$ n'ayant pas d'inégalités sur sa surface; la valeur du brouillage obtenue par la couche avec inégalités selon l'invention est très importante et donne satisfaction.

Une couche exempte d'irrégularités a été fabriquée avec le même dispositif que la couche selon l'invention; seuls ont été changés les compositions des gaz et leurs débits.

Ainsi:

. um mélange de $SiH_4$ et de $N_2$ à 0,9% en volume de $SiH_4$ avec un débit de 2,3 l/min,

. un mélange de $O_2$ et de $N_2$ à 26% en volume de $O_2$ avec un débit de 2,4 l/min,

. du gaz $N_2$ avec un débit de 10 l/min, sont dirigés vers le substrat chauffé.

Avec ces débits et ces compositions modifiées par rapport aux conditions opératoires selon l'invention, les grains de silice ne se sont pas formés dans l'espace entre la buse et la couche. On a seulement obtenu une couche lisse de 60 nm d'épaisseur.

Selon cette invention, on peut déposer une couche de silice ayant une surface inégale en utilisant un équipment de dépôt de cuoche basé sur la méthode CVD et utilisé généralement comme équipement de dépôt classique d'une couche comprenant la silice et ayant une surface lisse. Egalement, comme il est clair d'après l'exemple, on peut déposer une couche ayant une surface inégale sur un substrat, de façon continue.

Comme déjà dit, sur la couche à surface inégale ainsi formée, il est possible de déposer d'autres couches, par exemple conductrices et transparentes, ces autres dépôts ultérieurs peuvent être obtenus dans la même zone de revêtement 3, donc pratiquement en même temps.

Dans la description qui a précédé il a été dit que le substrat en sortie de la zone de revêtement subissait une recuisson. Mais d'autres traitements, à la place de la recuisson ou en complément sont également possibles.

## Revendications

1. Procédé pour former une couche de silice à surface irrégulière sur un substrat de verre, comprenant des grains de silice incrustés dans la couche, caractérisé en ce qu'on souffle sur le substrat chauffé, à partir d'une buse ayant une pluralité de sorties séparées, des molécules gazeuses contenant des atomes de silicium et un gaz oxydant, dilués dans des gaz inertes et en outre un gaz inerte de séparation et en ce qu'on contrôle la concentration X en molécules gazeuses comprenant des atomes de silicium dans le gaz inerte et la concentration Y du gaz oxydant dans le gaz inerte et, en outre, le débit de chaque gaz de façon que le rapport B/A soit compris entre 0,5 et 2 et le rapport C/A+B soit compris entre 0,1 et 1,5, "A" représentant le débit du mélange gaz au silicium+gaz inerte, "B" représentant le débit du mélange gaz oxydant-+gaz inerte et "C" représentunt le débit de gaz inerte de séparation, de façon à obtenir la formation de grains de silice par réaction entre des molécules gazeuses contenant le silicium et le gaz oxydant dans l'espace situé entre les sorties de la buse et le substrat et simultanément, de dépôt d'une couche de silice sur le substrat à partir des composants n'ayant pas encore réagi, les grains de silice s'incrustant dans ladite couche de façon à former une couche de silice à surface irrégulière.

2. Procédé selon la revendication 1, caractérisé en ce que le diamètre des grains de silice formés et incrustés dans la couche est compris entre 20 et 500 nm.

3. Procédé selon l'une des revendications 1 ou 2, caractérisé en ce que les molécules gazeuses contenant des atomes de silicium sont à base à base de $SiH_4$ ou $Si_2H_6$, en ce que le gaz oxydant est de l'oxygène et en ce que les gaz inertes sont de l'azote.

4. Procédé selon l'une des revendications 1 à 3, caractérisé en ce que le rapport Y/X est compris entre 10 et 40, "X" représentant la concentration en volume en gaz $SiH_4$ dans le mélange $SiH_4$+gaz inerte, "Y" représentant la concentration en volume en gaz oxydant dans le mélange gaz oxydant+gaz inerte.

5. Procédé selon l'une des revendications 1 à 4, caractérisé en ce que "X" est compris entre 2,5 et 4% et en ce que "Y" est compris entre 20 et 50%, "X" représentant la concentration en volume en gaz $SiH_4$ dans le mélange $SiH_4$+gaz inerte, "Y" représentant la concentration en volume en gaz oxydant dans le mélange gaz oxydant+gaz inerte.

6. Procédé selon l'une des revendications 1 à 5, caractérisé en ce que la buse est disposée à une distance de l'ordre de 2 cm du substrat.

7. Application du substrat de verre revêtu d'une couche de silice à surface irrégulière comprenant des grains incrustés dans la couche de silice, obtenu par le procédé selon l'une des revendications 1 à 6, à la réalisation de piles solaires.

## Patentansprüche

1. Verfahren zur Bildung eines Siliciumdioxidüberzugs mit unregelmäßiger Oberfläche auf einem Glassubstrat, daß in den Überzug inkrustierte Siliciumdioxidkörner umfaßt, dadurch gekennzeichnet, daß man auf das erhitzte Substrat über eine Düse mit einer Vielzahl von getrennten Öffnungen Siliciumatome enthaltende gasförmige Moleküle und ein oxidierendes Gas, verdünnt in Inertgasen, sowie außerdem ein inertes Trenngas bläst und daß man die Konzentration X der die Siliciumatome enthaltenden gasförmigen Moleküle im Inertgas und die Konzentration Y des oxidierenden Gases im Inertgas und außerdem den Durchsatz eines jeden Gases so steuert, daß das Verhältnis B/A zwischen 0,5 und 2 liegt und das Verhältnis C/A+B zwischen 0,1 und 1,5, wobei "A" den Durchsatz der Mischung aus siliciumhaltigem Gas und Inertgas darstellt, "B" den Durchsatz der Mischung aus oxidierendem Gas und Inertgas sowie "C" den Durchsatz an inertem Trenngas, und daß die Bildung von Siliciumdioxidkörnern durch Reaktion zwischen den das Silicium enthaltenen gasförmigen Molekülen und dem oxidierenden Gas im zwischen den Öffnungen der Düse und dem Substrat gelegenen Raum sowie gleichzeitig ausgehend von noch nicht abreagierten Bestandteilen die Ablagerung einer Siliciumdioxidschicht auf dem Substrat erreicht wird, wobei die Siliciumdioxidkörner auf eine Weise in die Schicht inkrustiert werden, daß eine Siliciumdioxidschicht mit unregelmäßiger Oberfläche gebildet wird.

2. Verfahren nach Anspruch 1, dadurch gekennzeichnet, daß der Durchmesser der Siliciumdioxidkörner, die gebildet und in die Schicht inkrustiert werden, zwischen 20 und 500 nm liegt.

3. Verfahren nach einem der Ansprüche 1 oder 2, dadurch gekennzeichnet, daß die die Siliciumatome enthaltenden gasförmigen Moleküle solche auf Basis von SiH$_4$ oder Si$_2$H$_6$ sind, das oxidierende Gas Sauerstoff ist und die Inertgase Stickstoff sind.

4. Verfahren nach einem der Ansprüche 1 bis 3, dadurch gekennzeichnet, daß das Verhältnis Y/X zwischen 10 und 40 liegt, wobei "X" die Volumenkonzentration an SiH$_4$-Gas in der Mischung aus SiH$_4$+Inertgas ist, und "Y" die Volumenkonzentration an oxidierendem Gas in der Mischung aus oxidierendem Gas+Inertgas ist.

5. Verfahren nach einem der Ansprüche 1 bis 4, dadurch gekennzeichnet, daß "X" zwischen 2,5 und 4% liegt und "Y" zwischen 20 und 50% liegt, wobei "X" die Volumenkonzentration an SiH$_4$-Gas in der Mischung aus SiH$_4$+Inertgas ist, und "Y" die Volumenkonzentration aus oxidierendem Gas in der Mischung aus oxidierendem Gas+Inertgas ist.

6. Verfahren nach einem der Ansprüche 1 bis 5, dadurch gekennzeichnet, daß die Düse in einer Entfernung in der Größenordnung von 2 cm vom Substrat angeordnet ist.

7. Anwendung eines mit einer Siliciumdioxidschicht mit unregelmäßiger Oberfläche, die in die Siliciumdioxidschicht eingebettete Körner umfaßt, beschichteten Glassubstrats, erhalten durch das Verfahren nach einem der Ansprüche 1 bis 6, auf die Herstellung von Sonnenzellen.

## Claims

1. A method of forming a layer of silica having an irregular surface on a glass substrate, the layer comprising grains of silica encrusted in the layer, characterized in that there are blown onto the heated substrate, from a nozzle having a plurality of separate outlets, gaseous molecules containing silicon atoms and an oxidizing gas diluted in inert gases and, in addition, an inert separation gas and in that the concentration X of gaseous molecules comprising silicon atoms in the inert gas and the concentration Y of the oxidizing gas in the inert gas, and, in addition, the flow rate of each gas are controlled in such a manner that the ratio B/A shall be from 0.5 to 2 and the ratio C/A+B shall be from 0.1 to 1.5, where "A" represents the flow rate of the mixture of silicon gas+inert gas, "B" represents the flow rate of the mixture of oxidizing gas+inert gas and "C" represents the flow rate of inert separation gas, in such a way as to obtain the forming of silica grains by reaction between gaseous molecules containing silicon and the oxidizing gas in the space situated between the outlets from the nozzle and the substrate and, simultaneously, the deposition of a silica layer on the substrate from the components that have not yet reacted, the silica grains becoming encrusted in said layer in such a manner as to form a layer of silica having an irregular surface.

2. A method according to Claim 1, characterized in that the diameter of the silica grains formed and encrusted in the layer is from 20 to 500 nm.

3. A method according to one of Claims 1 or 2, characterized in that the gaseous molecules containing silicon atoms are based upon SiH$_4$ or Si$_2$H$_6$, in that the oxidizing gas is oxygen and in that the inert gases are nitrogen.

4. A method according to one of Claims 1 to 3, characterized in that the ratio Y/X is from 10 to 40, where "X" represents the concentration by volume of SiH$_4$ gas in the mixture of SiH$_4$+inert gas, "Y" represents the concentration by volume of oxidizing gas in the mixture of oxidizing gas+inert gas.

5. A method according to one of Claims 1 to 4, characterized in that "X' is from 2.5 to 4% and in that "Y" is from 20 to 50%, where "X" represents the concentration by volume of SiH$_4$ gas in the mixture of SiH$_4$+inert gas, "Y"

represents the concentration by volume of oxidizing gas in the mixture of oxidizing gas+inert gas.

6. A method according to one of Claims 1 to 5, characterized in that the nozzle is disposed at a distance of the order of 2 cm from the substrate.

7. Application of the glass substrate coated with a layer of silica having an irregular surface comprising grains encrusted in the silica layer, obtained by the method according to one of Claims 1 to 6, for the production of solar cells.

FIG_1

FIG_2